# EUROPEAN PATENT APPLICATION

(11) **EP 0 555 041 A1**
(43) Date of publication of application: **11.08.1993**
(21) Application number: 93300736.1
(22) Date of filing: 02.02.1993
(51) Int. Cl.: F16K 11/065

(54) **Multiple way slide valve**

(30) Priority: 04.02.1992 GB 9202337
(71) Applicant: R. J. Pond Limited, Stroud Gloucestershire, GL6 OAU (GB)
(72) Inventor: Pond, Richard James, Stroud, Gloucestershire (GB)
(74) Representative: Carter, Gerald

(57) **Abstract**

The control valve comprises a valve body 10 having an internal slideway 14 and a plurality of ports 16a to 16d. The inner ends of the ports are spaced apart along the slideway. A valve operating member 18 is movable within the valve body between first and second positions. A slide valve 20 is movable along the slideway by the valve operating member and is urged into engagement with the slideway by resilient means 22 and sealed in use against the slideway by fluid pressure within the valve body. The inner ends of the ports are in the shape of elongate slots having longitudinal extents which are transverse to the direction of movement of the valve operating member. The slide valve has a cavity 28 in that surface which sealingly engages the slideway for providing fluid communication between a first pair of said ports 16a and 16b when the valve operating member is in one of its first and second positions and preferably for providing fluid communication between a second pair of said ports 16b and 16c when the valve operating member is in the other of its first and second positions. The control valve may be a monostable or bistable valve.

## Description

This invention relates to a control valve and more particularly, but not exclusively, to such a valve for subsea applications.

According to the present invention there is provided a control valve comprising a valve body having an internal slideway and a plurality of ports, the inner ends of which are spaced apart along the slideway, a valve operating member movable within the valve body between a first position and a second position, and a slide valve which is movable along the slideway by the valve operating member and which is urged into engagement with the slideway by resilient means and sealed in use against the slideway by fluid pressure within the valve body, the inner ends of the ports being in the shape of elongate slots, having longitudinal extents which are transverse to the direction of movement of the valve operating member, and the slide valve having a cavity in that surface which sealingly engages the slideway for providing fluid communication between the inner ends of two of said ports when the valve operating member is in one of its first and second positions.

Preferably, the cavity in the slide valve is arranged so as to provide fluid communication between the inner ends of a first pair of said ports when the valve operating member is in its first position and to provide fluid communication between the inner ends of a second pair of said ports when the valve operating member is in its second position.

In practice, the first and second pairs of ports will include one common port in most, if not all, cases.

The outer ends of the ports may be of conventional circular shape and may be offset from their respective inner ends. This arrangement allows the inner ends of the ports to be of substantially the same cross-sectional area as their outer ends and yet be spaced closer together than would be possible had the inner ends of the ports been of circular or substantially circular shape. It is thus possible to reduce the length of the valve and also its stroke length resulting in a reduction of its swept volume and a consequent reduction in the amount of fluid to be shuttled back and forth. It is also possible to maintain through cross sectional area flow passages equal or similar to the connection port areas.

Preferably, the resilient means is in the form of a compression spring acting between the slide valve and a spring pressure pad. The slide valve, spring and spring pressure pad may be mounted in a holder attached to, or forming part of, the valve operating member, or the slide valve and spring pressure pad may be mounted in respective recesses formed in the valve operating member and the spring may be mounted in an aperture communicating with the two recesses.

The control valve may be a bistable valve and in this case the valve is, preferably, movable between one stable state and the other by the selective application of fluid pressure (either directly or indirectly) to the appropriate end of the valve operating member, such as by solenoid operated pilot valves.

Alternatively, the control valve could be a monostable valve and in this case the valve is, preferably, movable to its unstable state by fluid pressure applied (either directly or indirectly) to one end of the valve operating member by a solenoid operated pilot valve. When power supply to the solenoid is removed, the control valve may be returned to its stable state by spring means and/or by fluid pressure within the valve body.

In either case, the pilot valve or valves may include a slide valve similar to that described above instead of a conventional needle valve. Such a slide valve is self-cleaning and this will allow the pilot valve to operate with less clean fluids than would be possible with a needle valve.

The invention will now be more particularly described, by way of example, with reference to the accompanying drawings, in which:-
Figure 1 is a longitudinal section through one embodiment of a control valve according to the present invention,
Figure 2 is a top plan view of the lower part of the valve body shown in Figure 1, showing the slideway and ports, and
Figure 3 is a longitudinal section through a second embodiment of a control valve according to the present invention.

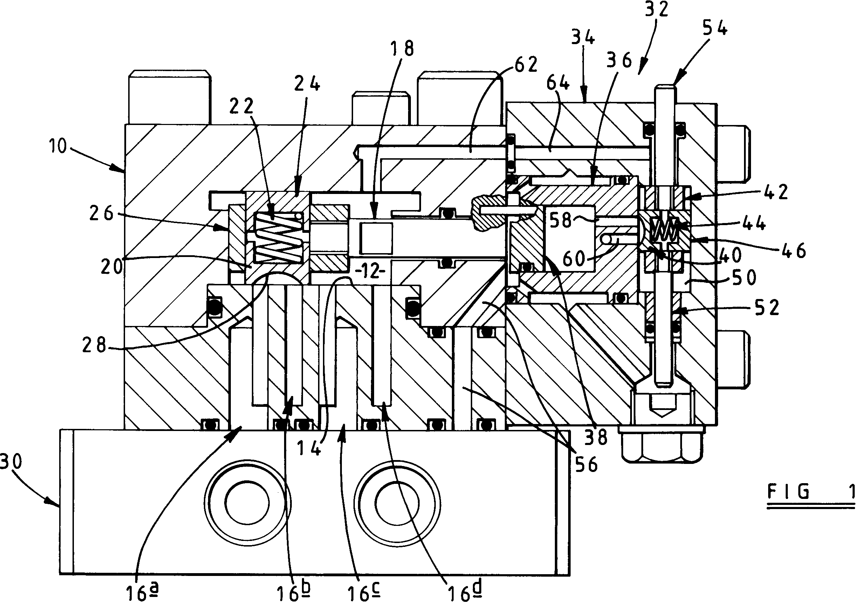

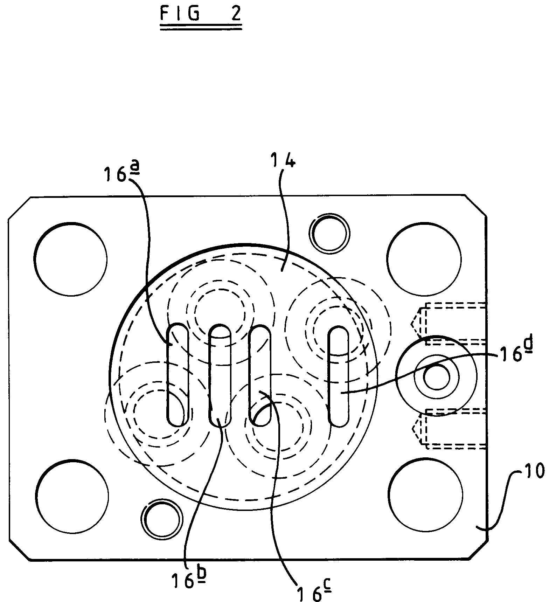

Referring firstly to Figures 1 and 2 of the drawings, the control valve shown therein is a monostable, 4 way, 2 position, valve designed to operate at a working pressure of 15,000 psi. The valve comprises a two part valve body 10 having a valve chamber 12, one wall of which is in the form of a flat internal slideway 14, and four ports 16a-16d.

The inner ends of the ports 16a-16d are spaced apart along the slideway 14 and, as shown in Figure 2, these inner ends of the ports 16a-16d are in the shape of elongate slots extending transversely to the longitudinal extent of the slideway 14. Also, as best shown in Figure 2, the outer end portions of the ports 16a-16d are of circular cross-section and are offset from their respective inner ends. As stated previously, this arrangement allows the inner ends of the ports to be of substantially the same cross-sectional area as their outer ends and yet be spaced closer together than would be possible if the inner ends of the ports were of circular shape. Typically, the inner ends of the ports 16a-16d have a length about four times their width.

The control valve also comprises a valve operating member in the form of a stem 18 slidable in the valve body 10 between a first position (shown in Figure 1) and a second position (not shown), and a slide valve 20 which is movable along the slideway 14 by the valve operating stem 18. The slide valve 20 is urged into sealing engagement with the slideway 14 by a compression spring 22 acting between the slide valve 20 and a spring pressure pad 24, and in use also by fluid pressure in the valve chamber 12.

The slide valve 20, spring 22 and spring pressure pad 24 are mounted in a holder in the form of a cage 26 which is attached to one end of the valve operating stem 18 and the slide valve 20 has a part cylindrical cavity 28 in its surface which sealingly engages the slideway 14 for providing fluid communication between the inner ends of ports 16a and 16b when the valve operating stem is in its first position and for providing fluid communication between the inner ends of ports 16b and 16c when the valve operating stem is in its second position.

The control valve is attached to a manifold 30 which communicates with the outer ends of the ports 16a-16d and has a solenoid operated pilot valve 32 for moving the valve operating stem 18 from its stable condition to its unstable condition.

The pilot valve 32 comprises a pilot valve housing 34, a piston housing 36, an operating piston 38 slidable in the piston housing 36, a slide valve 40 mounted in a holder 42 and urged into sealing engagement with one end of the piston housing 36 by a spring 44 acting between the slide valve 40 and a pressure pad 46, and in use also by fluid pressure in a slide valve chamber 50, a pilot valve piston 52 and a solenoid piston 54.

The end of the piston housing 36 to the left of the operating piston 38, as viewed in Figure 1, is connected to drain via a passage 56 in the valve body 10. The end of the piston housing 36 to the right of the operating piston 38 is also connected to drain via passages 58 and 60 in the piston housing 36 when the slide valve 40 is in the position shown, and is connected to fluid pressure in the valve chamber 12 via passages 62 and 64 in the valve body 10 and the housing 34, respectively, when the slide valve 40 is moved downwards in chamber 50 by the solenoid (not shown).

In use, ports 16a and 16c are connected to the function which the control valve is to operate, port 16b is connected to drain and port 16d is connected to a source of fluid pressure.

When the control valve is in its stable condition, the slide valve 40 will be in its upper position as shown in Figure 1. No pressure will be applied to the operating piston 38 and fluid pressure in the valve chamber 12 will hold the valve operating stem 18 in its second position (not shown) to thereby supply fluid pressure to port 16a and connect port 16c to drain. To move the control valve to its unstable condition, the solenoid is energised to move the solenoid piston 54 and hence the slide valve 40 downwards. The right hand side of the operating piston 38 will then be subjected to the pressure of fluid in valve chamber 12 via passages 58, 64 and 62 and will move to the left to the position shown thereby moving the valve operating stem 18 also to the position shown. The slide valve 20 will then connect port 16a to drain via port 16b and fluid pressure will by supplied via port 16d to port 16c. As soon as the solenoid is deenergised, the slide valve 40 will return to its upper position as shown in Figure 1 by virtue of the internal pressure in chamber 50 acting on the out of balance areas of the pistons 52 and 54, and fluid pressure in the valve chamber 12 will move the valve operating stem 18 to its second position.

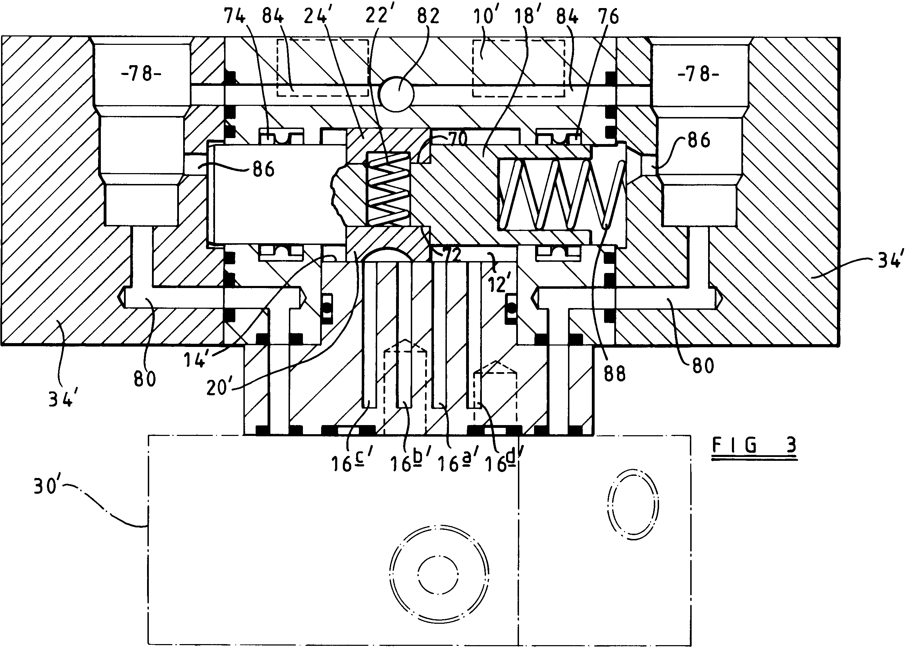

Referring now to Figure 3 of the drawings, the control valve shown therein is a bistable, 4 way, 2 position valve comprising a valve body 10', valve chamber 12', slideway 14', ports 16a'-16d' similar to those shown in Figure 1 (except that the positions of ports 16a' and 16c' have been reversed), a valve operating stem 18', and a slide valve 20' together with associated spring 22' and spring pressure pad 24'. The control valve is attached to manifold 30'.

In this case, the valve operating stem 18' is supported at both ends by the valve body 10', and the slide valve 20' and spring pressure pad 24' are mounted in opposed recesses 70, 72, respectively, formed in the valve operating stem 18'. The spring 22' is mounted in an aperture which is provided in the stem 18' and which communicates with the two recesses. Seals 74 and 76 are provided in the valve body 10' and make sealing contact with opposite end portions of the valve operating stem 18'.

The control valve shown in Figure 3 has two pilot valve housings 34', one at each end of the valve body 10'. Each housing 34' includes a pocket 78 for receiving a solenoid operated pilot valve (not shown). Each pocket 78 is in use connected to a source of relatively low fluid pressure via the manifold 30' and via a passage 80 in the valve body 10' and in the respective housing 34'. Each pocket 78 is also connected to a common drain 82 via a passage 84 and to an adjacent end of the valve chamber 12' by a passage 86.

The pilot valves may be of any appropriate form and may include a slide valve similar to the valve 40 of Figure 1. The pilot valves operate, when energised, to selectively supply a short pulse of relatively low pressure fluid to the appropriate end of the valve operating stem 18'.

When a pulse of fluid is supplied to the left hand end of the stem 18', the stem will move to the right and the slide valve 20' will connect port 16b' to port 16a', allowing pressurised fluid to flow through the chamber 12' from port 16d' to port 16c'. When a pulse of fluid is supplied to the right hand end of the stem 18', the stem will move to the left to the position shown in Figure 3 and the slide valve 20' will connect port 16c' to port 16b', allowing pressurised fluid to flow through the chamber 12' from port 16d' to port 16a'

As shown, the stem 18' is urged to the left by a weak compression spring 88. However, in use, the friction created between the slide valve 20' and the slideway 14' by fluid pressure in the valve chamber 12' will be too great to be overcome by the spring 88 and when the stem 18' is moved to the right it will remain in that position unless moved to the left by a pulse of fluid supplied to the right hand end of the stem.

These valves can be modified to provide 3 way, 2 position valves by omitting port 16a or 16a'.

Also, if the spring 88 is replaced by a stronger compression spring, the right hand pilot valve and pilot housing could be omitted, but in this case it will be necessary to keep the left hand pilot valve energised when it is desired that the slide valve 20' should connect port 16b' to port 16a'.

The control valves described above can be made very small indeed thereby allowing a number of valves to be packaged in a relatively small space. Typically, the overall length of the control valve, including the pilot valve, will be about 4 in. Also, the slide valves 20 (or 20') and 40 (when provided) make metal to metal sealing contact with their respective slideways and this does away with the need for resilient seals.

These valves are of particular use in subsea applications, but they may also be used, inter alia, in the aeronautical and aerospace industries.

## Claims

1. A control valve comprising a valve body (10) having an internal slideway (14) and a plurality of ports (16a to 16d), the inner ends of which are spaced apart along the slideway, a valve operating member (18) movable within the valve body between a first position and a second position, and a slide valve (20) which is movable along the slideway by the valve operating member and which is urged into engagement with the slideway by resilient means (22) and sealed in use against the slideway by fluid pressure within the valve body, the inner ends of the ports being in the shape of elongate slots, having longitudinal extents which are transverse to the direction of movement of the valve operating member, and the slide valve having a cavity (28) in that surface which sealingly engages the slideway for providing fluid communication between the inner ends of two of said ports when the valve operating member is in one of its first and second positions.

2. A control valve as claimed in claim 1, wherein the cavity (28) in the slide valve is arranged so as to provide fluid communication between the inner ends of a first pair of said ports (16a, 16b) when the valve operating member is in its first position and to provide fluid communication between the inner ends of a second pair of said ports (16b, 16c) when the valve operating member is in its second position.

3. A control valve as claimed in claim 1 or claim 2, wherein the resilient means is in the form of a compression spring (22) acting between the slide valve (20) and a spring pressure pad (24).

4. A control valve as claimed in claim 3, wherein the slide valve, spring and spring pressure pad are mounted in a holder (26) attached to, or forming part of, the valve operating member.

5. A control valve as claimed in claim 3, wherein the slide valve (20') and spring pressure pad (24') are mounted in respective recesses (70, 72) in the valve operating member (18') and the spring (22') is mounted in an aperture communicating with the two recesses.

6. A control valve as claimed in any one of the preceding, claims wherein the valve is a bistable valve.

7. A control valve as claimed in claim 6, wherein the valve is movable between one stable state and the other by selective application of fluid pressure to the appropriate end of the valve operating member by solenoid operated pilot valves.

8. A control valve as claimed in any one of claims 1 to 5, wherein the valve is a monostable valve.

9. A control valve as claimed in claim 8, wherein the valve is movable to its unstable state by fluid pressure applied to one end of the valve operating member by a solenoid operated pilot valve (32).

10. A control valve as claimed in claim 7 or claim 9, wherein the or each pilot valve includes a further slide valve (40) urged into sealing engagement with a further slideway by a compression spring (44) acting between the further slide valve and a further spring pressure pad (46).
